(19) Europäisches Patentamt European Patent Office Office européen des brevets

(11) **EP 2 092 271 B1**

(12) **FASCICULE DE BREVET EUROPEEN**

(45) Date de publication et mention
de la délivrance du brevet:
**29.09.2010 Bulletin 2010/39**

(21) Numéro de dépôt: **07871838.4**

(22) Date de dépôt: **12.12.2007**

(51) Int Cl.:
***G01C 19/56*** *(2006.01)*    ***G01C 25/00*** *(2006.01)*

(86) Numéro de dépôt international:
**PCT/FR2007/002044**

(87) Numéro de publication internationale:
**WO 2008/090275 (31.07.2008 Gazette 2008/31)**

(54) **PROCÉDÉ D'ÉTALONNAGE DU FACTEUR D'ÉCHELLE D'UN GYROMÈTRE VIBRANT AXISYMÉTRIQUE**

VERFAHREN ZUR KALIBRIERUNG EINES SKALENFAKTORS IN EINEM ACHSENSYMMETRISCHEN VIBRIERENDEN GYROMETER

METHOD FOR CALIBRATING A SCALE FACTOR IN AN AXISYMMETRICAL VIBRATING GYROMETER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.12.2006 FR 0611155**

(43) Date de publication de la demande:
**26.08.2009 Bulletin 2009/35**

(73) Titulaire: **SAGEM Défense Sécurité 75015 Paris (FR)**

(72) Inventeurs:
• **JEANROY, Alain**
**F-78700 Conflans Sainte-Honorine (FR)**

• **RENAULT, Alain**
**F-95300 Pontoise (FR)**
• **CARON, Jean-Michel**
**F-95210 Saint-gratien (FR)**

(74) Mandataire: **Lavialle, Bruno François Stéphane et al**
**Cabinet Boettcher**
**22 rue du Général Foy**
**75008 Paris (FR)**

(56) Documents cités:
**US-A- 5 712 427    US-A1- 2005 257 596**

## Description

La présente invention concerne un procédé de calibrage d'un facteur d'échelle d'un gyromètre vibrant axisymétrique.

ARRIERE PLAN DE L'INVENTION

On sait qu'un gyromètre vibrant isotrope est constitué d'un résonateur axisymétrique à deux degrés de liberté.
L'organe vibrant du résonateur est mis en vibration à la fréquence de résonance de l'organe vibrant par un signal de commande d'amplitude. Pour contrôler l'orientation de la vibration, un signal de commande de précession est également appliqué à l'organe vibrant de façon qu'une mesure de la vibration de l'organe vibrant et une démodulation de cette vibration à la fréquence de résonance de l'organe vibrant permettent par des équations appropriées de déterminer la vitesse de rotation à laquelle le résonateur est soumis.
Le signal de commande d'amplitude et le signal de commande de précession sont appliqués par des électrodes de commande présentant un gain moteur qui est le rapport entre l'amplitude de la force générée par le signal de commande et l'amplitude du signal de commande. De même, le signal de sortie est mesuré par des électrodes de détection présentant un gain détecteur qui est le rapport entre l'amplitude de la vibration et l'amplitude correspondante du signal de sortie.
La précision de calcul de la vitesse de rotation est fonction de la précision du facteur d'échelle du résonateur, le facteur d'échelle étant le rapport entre la vitesse de rotation du résonateur et la commande de précession ou un signal de sortie équivalent.
On a constaté que le facteur d'échelle varie en fonction de la température à laquelle le résonateur est soumis, et varie également dans le temps en fonction du vieillissement des composants. Ces variations affectent donc la précision des mesures.
Pour améliorer la précision du facteur d'échelle, il est connu de mémoriser dans l'unité de traitement du gyromètre des tables donnant les variations du facteur d'échelle en fonction de la température et en fonction de l'âge du résonateur. Lors d'une utilisation du gyromètre, une mesure de la température permet donc d'effectuer un calibrage du facteur d'échelle. Toutefois, les tables sont établies par une modélisation prédictive qui n'est pas satisfaisante et il peut donc exister des différences entre les variations de facteur d'échelle enregistré et les variations réelles du facteur d'échelle lors de l'utilisation d'un gyromètre.
Par ailleurs, le document US2005/257596 décrit un procédé de calibrage du facteur d'échelle d'un gyromètre vibrant axisymétrique dans lequel un facteur d'échelle calibré est calculé en faisant tourner l'organe vibrant à une vitesse angulaire connue et en mesurant une tension de sortie résultante, puis le facteur d'échelle réel est déduit du facteur d'échelle calibré par une relation de proportionnalité

OBJET DE L'INVENTION

Le but de l'invention est de réaliser un calibrage du facteur d'échelle d'un gyromètre à partir du gyromètre lui-même.

RESUME DE L'INVENTION

En vue de la réalisation de ce but, on propose selon l'invention un procédé de calibrage d'un facteur d'échelle d'un gyromètre vibrant axisymétrique fonctionnant par application d'un signal de commande d'amplitude et d'un signal de commande de précession à un organe vibrant mis en vibration à une fréquence donnée, le procédé comportant une étape de pré calibrage consistant à calculer un rapport de référence de gains entre un gain moteur selon une première direction et un gain moteur selon une seconde direction en quadrature modale avec la première direction, et à mémoriser le rapport de référence de gains, et une étape de calibrage consistant à calculer une valeur d'une grandeur mesurable liée au facteur d'échelle selon une relation de proportionnalité incluant le rapport de référence de gains et calculer un facteur d'échelle corrigé à partir de la valeur de la grandeur mesurable et du rapport de référence de gains mémorisé.
On a en effet constaté qu'alors que le gain moteur selon chaque direction varie en fonction de la température et varie dans le temps, le rapport des gains moteurs selon deux directions en quadrature modale peut être considéré comme constant au degré de précision habituellement recherché. Il est donc possible d'effectuer en atelier une détermination précise du rapport de référence de gains. Une mesure instantanée de la grandeur mesurable permet alors un calibrage précis du facteur d'échelle du gyromètre au moment de son utilisation. Le procédé selon l'invention est particulièrement intéressant lorsque le gyromètre est configuré et mis en oeuvre comme décrit dans le document FR-A-2 851 041 (ou son équivalent US 7 010 977) car le signal de commande d'amplitude et le signal de commande de précession sont appliqués aux mêmes électrodes de sorte que le rapport des gains moteurs reste égal à 1 quels que soient la température et le temps écoulé.

Selon un premier mode de mise en oeuvre de l'invention, la grandeur mesurable est une variation de la fréquence de vibration de l'organe vibrant en fonction d'une variation d'un signal de commande de raideur appliqué à au moins une électrode de commande. De préférence, le signal de commande de raideur est en quadrature temporelle avec le signal de commande d'amplitude et le signal de commande de précession, et le signal de commande de raideur est en quadrature géométrique modale avec le signal de commande de précession. Ainsi, le signal de commande de précession est très faiblement perturbé par le signal de raideur, de sorte que celui-ci peut être appliqué de façon permanente.

Selon un autre mode de mise en oeuvre du procédé selon l'invention, la grandeur mesurable est une variation d'amplitude de la vibration de l'organe résonant en fonction d'une variation du signal de commande d'amplitude.

BREVE DESCRIPTION DES DESSINS

D'autres caractéristiques et avantages de l'invention apparaîtront à la lecture de la description qui suit de deux modes de mise en oeuvre particuliers non limitatifs de l'invention en relation avec les figures ci-jointes parmi lesquelles :

- la figure 1 est une vue en coupe schématique d'un résonateur hémisphérique pouvant être utilisé dans la mise en oeuvre du procédé selon l'invention,
- la figure 2 est une représentation schématique de l'évolution de l'amplitude lors d'un calibrage conforme au second mode de mise en oeuvre de l'invention.

DESCRIPTION DETAILLEE DE L'INVENTION

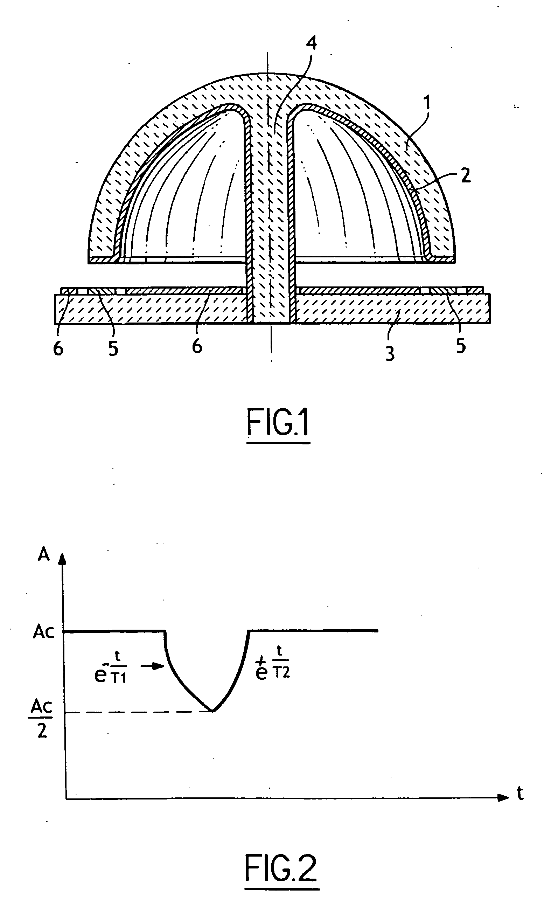

En référence à la figure 1, le procédé de calibrage selon l'invention peut être mis en oeuvre avec tout gyromètre vibrant isotrope comportant un résonateur axisymétrique à deux degrés de liberté, en particulier un résonateur comportant de façon connue en soi un organe vibrant hémisphérique 1, par exemple une cloche réalisée en silice et fixée par une tige 4 à un socle 3. La surface interne de la cloche 1 ainsi que le bord de celle-ci et la tige 4 sont recouverts d'une couche de métal 2. Le socle 3 porte des électrodes 5 qui peuvent soit être chacune dédiée à une fonction de commande ou de détection, soit avoir chacune une fonction alternée de commande et de détection par multiplexage. Les électrodes s'étendent en regard du bord de l'organe vibrant 1. Le résonateur comporte en outre une électrode de garde 6. Pour une mise en oeuvre gyrométrique, l'organe vibrant est tout d'abord mis en vibration par application d'un signal de commande d'amplitude $CA$ et la vibration obtenue est orientée au moyen d'un signal de commande de précession $CP$.

Selon un premier mode de mise en oeuvre de l'invention, un signal alternatif de commande de raideur $CR$ est en outre appliqué à au moins une électrode de commande. Ce signal de commande de raideur est de préférence appliqué en quadrature temporelle avec le signal de commande d'amplitude $CA$ et avec le signal de commande de précession $CP$. Le signal de commande de raideur $CR$ est en outre en quadrature géométrique modale avec le signal de commande de précession $CP$, c'est-à-dire que dans le cas d'une vibration entretenue à la fréquence de résonance de l'organe vibrant 1, le signal de commande de raideur $CR$ est appliqué à des électrodes de commande disposées à 90° par rapport à celles recevant le signal de commande de précession, tandis que si l'organe vibrant est excité à une fréquence double de la fréquence de résonance, le signal de commande de raideur $CR$ est appliqué à des électrodes de commande disposées à 45° par rapport aux électrodes de commande recevant le signal de commande de précession.

L'électronique de mise en oeuvre permet de régler les signaux de commande pour que l'amplitude de la vibration corresponde à une valeur de consigne Ac selon une première direction $x$ tandis que l'amplitude de la vibration est nulle selon une seconde direction $y$ en quadrature modale avec la première direction $x$. La force en $x$ correspond à la commande d'amplitude $CA$ et la force en $y$ correspond à la commande de précession $CP$. La valeur de la commande $CP$ est la mesure de la vitesse Ω. On obtient alors selon les directions $x$ et $y$ les équations de mouvements suivantes :

$$m.x''+f.x'+r.x = CA.x'+CR.x \quad (1)$$

$$0 = 2.m.x'\Omega + F_y \quad (2)$$

où $m$ est la masse de l'organe vibrant 1, $f$ est l'amortissement de la vibration, $r$ est la raideur de l'organe vibrant, Ω est la vitesse de rotation à mesurer et $F_y$ est la force en $y$.

Par ailleurs, en présence de la commande de raideur, la fréquence du résonateur est donnée par l'équation :

$$\omega = \sqrt{\frac{r - CR}{m}} \quad (3)$$

avec

$$dCR = 2.m.\omega.d\omega \quad (4)$$

En pratique, compte tenu du gain moteur *Gmx* selon la direction *x* et du gain détecteur *Gd* pour la mesure de l'amplitude, l'équation (4) devient :

$$2.m.\omega.d\omega = dCR.Gmx.Gd \quad (5)$$

d'où l'on tire le rapport *V* de variation de la fréquence de vibration par rapport à la variation de la raideur :

$$V = \frac{d\omega}{dCR} = \frac{Gmx.Gd}{2.m.\omega} \quad (6).$$

Par ailleurs, en première approximation des valeurs trigonométriques qu'elle contient x' peut être mise sous la forme *x' = ω.Ac/Gd.* En outre, en introduisant le gain moteur *Gmy* selon la direction *y,* on a : *Fy = CP.Gmy.* L'équation (2) devient donc :

$$O = 2.m.\Omega.\omega \frac{Ac}{Gd} + CP.Gmy \quad (7)$$

d'où l'on tire le facteur d'échelle *Gfe* :

$$Gfe = \frac{\Omega}{CP} = \frac{Gmy.Gd}{2.m.\omega.Ac} \quad (8)$$

en extrayant la valeur du gain détecteur *Gd* de l'équation (6) et en la portant en équation (8) on obtient :

$$\frac{V}{Gfe} = \frac{Gmx}{Gmy} Ac \quad (9)$$

*V* est une grandeur mesurable en faisant varier la commande de raideur et en calculant la variation correspondante de la fréquence de vibration.

Ainsi qu'il a été vu ci-dessus, le rapport du gain moteur selon *x* au gain moteur selon *y* est constant, de sorte que pour une consigne *Ac* identique pour la mesure en atelier et lors du calibrage du facteur d'échelle, le rapport *V/Gfe* reste constant. En pratique, le rapport *Gmx/Gmy* est mesuré en atelier et est mémorisé dans l'unité de traitement du résonateur. Lorsque l'on souhaite effectuer un calibrage du facteur d'échelle *Gfe*, il suffit donc de mesurer la valeur instantanée de *V* et de choisir une consigne d'amplitude Ac identique à celle utilisée lors du calcul du rapport de gains moteurs ce qui permet alors de calculer le facteur d'échelle corrigé *Gfe* à partir de l'équation (9).

Cette façon de calibrer convient pour les capteurs dont l'amplitude de la commande de raideur *CR* provoque des variations de fréquence importantes devant les variations de fréquence provoquées par des évolutions en température du résonateur. Ce mode de mise en oeuvre du procédé de l'invention peut donc être utilisé en particulier pour des gyromètres du type quapason.

Pour les gyromètres dont la variation de fréquence est insuffisante lors des variations de la commande de raideur, notamment les gyromètres résonants hémisphériques, on utilise un second mode de mise en oeuvre du procédé selon l'invention fondé sur une variation de la commande d'amplitude. En effet, en fonctionnement normal l'électronique de traitement est configurée pour maintenir l'amplitude de la vibration à une valeur de consigne constante *Ac*. Lorsque la commande d'amplitude *CA* est remplacée par un signal proportionnel à l'amplitude de la vibration, l'amplitude évolue selon une exponentielle descendante d'exposant $\sqrt{t}/T1$ où *T1* est la constante de temps de l'exponentielle descendante, illustrée sur la figure 2. Cette commande est maintenue jusqu'à ce que l'amplitude atteigne un seuil bas prédéterminé, *AC/2* dans l'exemple illustré sur la figure 2. Lorsque l'amplitude atteint le seuil bas, la commande d'amplitude est inversée et l'amplitude évolue selon une exponentielle montante d'exposant +*t/T2* où *T2* est la constante de temps de cette deuxième exponentielle. Les expressions des constantes de temps dans le système mécanique sont données par les équations de second ordre suivantes :

$$\frac{1}{T1} = \frac{CA.Gmx.Gd}{2.m.\omega} - \frac{\dot{\omega}}{2Q} \quad (10)$$

$$\frac{1}{T2} = \frac{CA.Gmx.Gd}{2.m.\omega} + \frac{\omega}{2Q} \quad (11)$$

A partir de ces deux équations, on obtient le coefficient d'efficacité électromécanique :

$$C = 0,5\left[\frac{1}{T1} + \frac{1}{T2}\right] = \frac{CA.Gmx.Gd}{2.m.\omega} \quad (12)$$

Des équations (8) et (12), on tire après simplification le rapport :

$$\frac{C}{Gfe} = \frac{CA.Ac.Gmx}{Gmy} \quad (13)$$

De même que précédemment, le rapport *C/Gfe* dépend directement du rapport constant *Gmx/Gmy*.

Le rapport *Gmx/Gmy* ayant été mesuré en atelier et mémorisé dans l'unité de traitement, lorsque l'on souhaite effectuer un calibrage du facteur d'échelle, la commande d'amplitude est remplacée par un signal proportionnel à l'amplitude de la vibration. Des points successifs de l'exponentielle descendante sont relevés et permettent de calculer la constante de temps *T1* à partir de modèles mémorisés dans l'unité de traitement. Lorsque l'amplitude de la vibration atteint le seuil bas, la commande d'amplitude est inversée et des points successifs de la variation de l'amplitude sont relevés pour déterminer la constante de temps *T2* de l'exponentielle montante. Il est alors possible de calculer le coefficient d'efficacité électromécanique *C* donné par la formule (12). La valeur de *C* est ensuite portée dans l'équation (13) dont on extrait la valeur actualisée du facteur d'échelle.

Lorsque la commande d'amplitude est envoyée aux électrodes de commande à la fréquence de résonance de l'organe résonant, le signal détecté est conforme aux équations ci-dessus.

Lorsque la commande d'amplitude et la commande de précession sont envoyées à une fréquence double de la fréquence de résonance de l'organe vibrant, les électrodes de commande génèrent une pression électrostatique dont l'expression peut être ramenée à un terme unique proportionnel à l'amplitude, ce qui signifie qu'en envoyant sur les électrodes de commande une commande d'amplitude *CA* constante, le coefficient d'efficacité électromécanique C est ramené à l'expression :

$$C = \frac{CA.Gmx}{2.m.\omega} \quad (14)$$

de sorte que le rapport *C/Gfe* est simplifié selon l'équation :

$$\frac{C}{Gfe} = \frac{CA\,Gmx}{Gmy} \quad (15)$$

Bien entendu l'invention n'est pas limitée aux modes de mise en oeuvre décrits ci-dessus et est susceptible de variantes de réalisation qui apparaîtront à l'homme de métier sans sortir du cadre de l'invention telle que définie par les revendications.

En particulier, bien que dans le mode de réalisation préféré du second mode de réalisation, le seuil bas de l'amplitude soit choisi égal à la moitié de la consigne d'amplitude, ce qui permet d'avoir une variation significative de l'amplitude tout en effectuant un calibrage de courte durée, on peut utiliser un autre seuil en fonction des impératifs de fonctionnement du gyromètre.

## Revendications

1. Procédé de calibrage d'un facteur d'échelle d'un gyromètre vibrant axisymétrique fonctionnant par application d'un signal de commande d'amplitude (*CA*) et d'un signal de commande de précession (*CP*) à un organe vibrant mis en vibration à une fréquence donnée, **caractérisé en ce qu'**il comporte une étape de pré calibrage consistant à calculer un rapport de référence de gains entre un gain moteur (*Gmx*) selon une première direction et un gain moteur *(Gmy)* selon une seconde direction en quadrature modale avec la première direction, et à mémoriser le rapport de référence de gains, et une étape de calibrage consistant à calculer une valeur d'une grandeur mesurable liée au facteur d'échelle selon une relation de proportionnalité incluant le rapport de référence de gains, et calculer un facteur d'échelle corrigé à partir de la valeur de la grandeur mesurable et du rapport de référence de gains mémorisé.

2. Procédé de calibrage selon la revendication 1, **caractérisé en ce que** la grandeur mesurable est une variation de la fréquence de vibration en fonction d'une variation d'un signal de commande de raideur appliqué à au moins une électrode de commande.

3. Procédé de calibrage selon la revendication 2, **caractérisé en ce que** le signal de commande de raideur est en quadrature temporelle avec le signal de commande d'amplitude et le signal de commande de précession, et le signal de commande de raideur est en quadrature géométrique modale avec le signal de commande de précession.

4. Procédé de calibrage selon la revendication 1, **caractérisé en ce que** la grandeur mesurable est une variation d'amplitude en fonction d'une variation du signal de commande d'amplitude (*CA*).

5. Procédé de calibrage selon la revendication 4, **caractérisé en ce que** le signal de commande d'amplitude (*CA*) est généré pour provoquer une variation d'amplitude à partir d'une amplitude de consigne *(Ac)* jusqu'à un seuil d'amplitude bas suivi d'une variation inverse depuis le seuil d'amplitude bas jusqu'à l'amplitude de consigne *(Ac)*.

6. Procédé de calibrage selon la revendication 5, **caractérisé en ce que** le seuil d'amplitude bas est égal à la moitié de l'amplitude de consigne.

## Claims

1. A method of calibrating a scale factor of an axially-symmetrical vibrating rate gyro operating by applying an amplitude control signal (CA) and a precession control signal (CP) to a vibrator member set into vibration at a given frequency, the method being **characterized in that** it comprises a pre-calibration step consisting in calculating a reference gain ratio between a drive gain (Gmx) in a first direction and a drive gain (Gmy) in a second direction in modal quadrature with the first direction, and in storing the reference gain ratio, and a calibration step consisting in calculating a value for a measurable magnitude associated with the scale factor by a proportionality relationship including the reference gain ratio, and calculating a corrected scale factor on the basis of the value of the measurable magnitude and the stored reference gain ratio.

2. A calibration method according to claim 1, **characterized in that** the measurable magnitude is a variation in the vibration frequency as a function of a variation in a stiffness control signal applied to at least one control electrode.

**3.** A calibration method according to claim 2, **characterized in that** the stiffness control signal is in time quadrature with the amplitude control signal and the precession control signal, and the stiffness control signal is in modal quadrature geometrically with the precession control signal.

**4.** A calibration method according to claim 1, **characterized in that** the measurable magnitude is an amplitude variation as a function of a variation in the amplitude control signal (CA).

**5.** A calibration method according to claim 4, **characterized in that** the amplitude control signal (CA) is generated to cause a variation in amplitude away from a setpoint amplitude (Ac) to a low amplitude threshold, followed by an inverse variation from the low amplitude threshold up to the setpoint amplitude (Ac).

**6.** A calibration method according to claim 5, **characterized in that** the low amplitude threshold is equal to half the setpoint amplitude.

**Patentansprüche**

**1.** Verfahren zur Kalibrierung eines Skalenfaktors eines achsensymmetrischen Schwingungsgyrometers, der durch Anlegen eines Amplitudensteuersignals (*CA*) und eines Präzessionssteuersignals (*CP*) an einem mit einer gegebenen Frequenz in Schwingung versetzten Schwingungselement funktioniert, **dadurch gekennzeichnet, dass** es einen Schritt der Vorkalibrierung umfasst, der darin besteht, dass ein Verstärkungsreferenzverhältnis zwischen einer Antriebsverstärkung (*Gmx*) in einer ersten Richtung und einer Antriebsverstärkung (*Gmy*) in einer zweiten Richtung berechnet wird, die modal um 90˚ phasenverschoben zur ersten Richtung ist, und das Verstärkungsreferenzverhältnis gespeichert wird, sowie einen Schritt der Kalibrierung, der darin besteht, dass ein Wert einer messbaren Größe berechnet wird, die mit dem Skalenfaktor gemäß einer Proportionalitätsbeziehung verbunden ist, die das Verstärkungsreferenzverhältnis einschließt, und ein korrigierter Skalenfaktor anhand des Wertes der messbaren Größe und des gespeicherten Verstärkungsreferenzverhältnisses berechnet wird.

**2.** Verfahren zur Kalibrierung nach Anspruch 1, **dadurch gekennzeichnet, dass** die messbare Größe eine Veränderung der Schwingungsfrequenz in Abhängigkeit von einer Veränderung eines Steifigkeitsteuersignals ist, das an mindestens einer Steuerelektrode angelegt wird.

**3.** Verfahren zur Kalibrierung nach Anspruch 2, **dadurch gekennzeichnet, dass** das Steifigkeitssteuersignal gegenüber dem Amplitudensteuersignal und dem Präzessionssteuersignal temporal um 90˚ phasenverschoben ist, und das Steifigkeitssteuersignal gegenüber dem Präzessionssteuersignal modal geometrisch um 90˚ phasenverschoben ist.

**4.** Verfahren zur Kalibrierung nach Anspruch 1, **dadurch gekennzeichnet, dass** die messbare Größe eine Amplitudenveränderung in Abhängigkeit von einer Veränderung des Amplitudensteuersignals (*CA*) ist.

**5.** Verfahren zur Kalibrierung nach Anspruch 4, **dadurch gekennzeichnet, dass** das Amplitudensteuersignal (*CA*) erzeugt wird, um eine Amplitudenveränderung von einer Sollamplitude (*Ac*) bis hin zu einem unteren Amplitudenschwellenwert hervorzurufen, gefolgt von einer umgekehrten Veränderung von dem unteren Amplitudenschwellenwert bis hin zur Sollamplitude (*Ac*).

**6.** Verfahren zur Kalibrierung nach Anspruch 5, **dadurch gekennzeichnet, dass** der untere Amplitudenschwellenwert gleich der Hälfte der Sollamplitude ist.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005257596 A
- FR 2851041 A
- US 7010977 B